# EUROPEAN PATENT SPECIFICATION

(11) **EP 3 611 592 B1**
(45) Date of publication and mention of the grant of the patent: **24.03.2021**
(21) Application number: 19191434.0
(22) Date of filing: 13.08.2019
(51) Int. Cl.: G05D 23/19, F24D 19/10

(54) **IMPROVED THERMOSTAT ASSEMBLY**
VERBESSERTE THERMOSTATANORDNUNG
ENSEMBLE DE THERMOSTAT AMÉLIORÉ

(30) Priority: 17.08.2018 IT 201800008109
(43) Date of publication of application: 19.02.2020
(73) Proprietor: Selmo S.N.C. Di Bozzato Mauro E Fantin Alessandro, 35030 Rubano (PD) (IT)
(72) Inventor: FANTIN, Alessandro, 35030 Selvazzano Dentro (PD) (IT)
(74) Representative: Marchioro, Paolo

(56) References cited:
- Anonymous: "KTX 1, KTX 2, KTX 3, KTX 4. User Manual.", , 10 November 2016 (2016-11-10), XP055582369, Retrieved from the Internet: URL:https://web.archive.org/web/2016111020 5550if_/http://www.hessen.ee/tootelehed/te rma/user_manual_terma_ktx.pdf [retrieved on 2019-04-18]
- Anonymous: "KTX4 installation", , 20 May 2014 (2014-05-20), XP055582417, Retrieved from the Internet: URL:https://www.youtube.com/watch?v=wwwhhp Avhtg [retrieved on 2019-04-18]
- Anonymous: "TERMA Heating Products 2015", , 31 December 2015 (2015-12-31), pages 1-20, XP055582392, Retrieved from the Internet: URL:https://en.termaheat.com/sites/default /files/download/terma_catalogue_2015_1.pdf [retrieved on 2019-04-18]

## Description

The present invention relates to an improved thermostat assembly, particularly suitable for being used in radiator devices, such as for example radiators and heaters.

A thermostat is a device that regulates the temperature value in a given environment or in a specific heater device.

Operationally, the temperature regulation provides for the detection of the temperature value by a suitable sensor and for sending this value to the thermostat.

Once the value detected by the sensor is received, it is compared with a predefined value, producing a command signal towards an actuator that converts the signal, electrical or pneumatic, into the regulating action on the final controlled device.

This regulating action is exerted on the heating means which, flowing inside the heater device, transfer the heat to the latter and consequently to the external environment.

Usually, such heating means consist of water, air, steam, etc.

In this way a feedback control of the temperature of the heater device is established.

The sensors, probes or so-called sensitive elements are generally used for detecting the temperature and, sometimes, also the humidity present in an environment.

It is possible to distinguish into simple sensors, which measure the process variable and provide an analog signal, transducer sensors, which transform the signal into an input/output for the thermostat, and transmitter sensors, which amplify the low intensity signal coming from a simple sensor and filter them from any "background noise".

The choice of the sensor type for the temperature control is a critical condition for its good use.

However, even if the sensor used is sophisticated, precise and of high quality, any incorrect installation and/or positioning affect the quality of the regulation, resulting in disadvantageous energy expenditure.

In order to regulate the temperature according to a pre-selected trend over time, the so-called chronothermostat is used.

This type of thermostats generally comprises a casing containing the electronic thermoregulation means of the device, a display for viewing the operating parameters and a keyboard connected thereto, for programming the chronothermostat.

The casing is normally partially removable so as to allow the replacement of any power supply batteries and/or facilitate the installation of the thermostat itself.

Advantageously, the use of such chronothermostats in the dwellings allows the temperature regulation to be obtained in different time bands or on different days, guaranteeing significant energy savings.

Thermostats and chronothermostats play a particularly critical role with regard to radiant systems because, being low-temperature terminals, they are generally characterized by a considerable thermal inertia.

Among these radiant terminals, we note in particular the so-called radiators or towel rails and the actual heaters.

The temperature regulating thermostats, in addition to allowing a safe use of such heater devices, also guarantee an energy saving of their use.

The thermostat or the chronothermostat can be arranged inside the device and when the temperature reaches the predefined limit, the suspension of the power supply is automatically triggered.

A disadvantage of these thermostats is represented by their arrangement, in particular by the arrangement of the visual display and the keyboard for the regulation when they are installed in the heater device.

The known thermostats, in fact, are usually fixed by means of a thread to the temperature detection probes which, in turn, by means of a further external thread, are associated with the heater device, such as for example the radiators.

However, when the probe, and therefore the thermostat constrained thereto, is screwed to the heater device, it is not possible to predict whether the final orientation of the thermostat, in particular of the display and the keyboard, will actually be such as to allow the view of the process parameters and their regulation by the user.

It is possible in fact that the screwing of the probe, and therefore of the thermostat, to the heater device ends up there where the display and the keyboard are turned towards the wall where the heater device is mounted, and not frontally towards the user's position.

To overcome this drawback, it is necessary to uninstall the probe and the thermostat and proceed with their re-installation, with a consequent waste of time.

A thermostat is known, identified with the name KTX4 of the Terma company, with user manual "KTX 1, KTX 2, KTX 3, KTX 4. User Manual.", 10 November 2016, https://web.archive.org/web/20161110205550if_/http:// www.hessen.ee/tootelehed/terma/user_manual_terma_ktx.pdf, which is configured so that it can be positioned in the radiator device by rotating its casing in the optimal position for the user to view its screen.

However, the particular configuration of this thermostat allows this rotation to take place only before the thermostat is put into operation because, in order to be installed and connected to the mains, it must be locked to the heater by fixing with an Allen key which prevents further movements.

Therefore, during operation this thermostat still has the limits indicated above for the known thermostats.

Another drawback of the thermostats present on the market is represented by the fact that they generally operate on batteries, so it will be necessary, in their ordinary maintenance, to replace such batteries once they have been used up. Given the particular arrangement of such thermostats associated with the heater device and, usually, positioned at a distance of a few centimetres from the wall where the device itself is installed, in order to be able to replace them, the user must disadvantageously remove the thermostat so as to open the casing containing the batteries and replace them, obviously this requiring not negligible execution times.

Further disadvantageously, also in the case wherein the user should perform a calibration and/or check the correct functionality of the thermostat, he will necessarily have to remove it from its position and then re-install it once the check operations have been completed.

Still disadvantageously, the uninstallation and subsequent installation of the known thermostats must be carried out by performing the disassembly of the tool by personnel with the necessary skills.

It must be reminded, in fact, that in the case of electric heater devices, they fall into the category of electric current appliances, therefore during these installation/uninstallation procedures all those safety recommendations known in the electric field must be followed

A further drawback of known thermostats is represented by the fact that they are generally arranged in environments such as the bathroom and the kitchen, therefore particular care must be taken in carrying out the aforementioned installation/uninstallation operations to prevent them from coming into contact with water and humidity which would lead to their malfunctioning or, worse, to their breakage.

The present invention intends to overcome all the mentioned drawbacks.

In particular, one of the objects of the present invention is to provide a thermostat assembly which allows the user to orient the display and/or the programming keyboard without having to uninstall the thermostat from the heater device.

Another object of the present invention is to provide a thermostat assembly which, once installed on the heater device, does not need to be removed for normal maintenance operations.

Yet another object of the present invention is that this thermostat assembly is hermetically sealed with respect to the external environment, so that it can be positioned in particularly humid environments or in which water splashes are present, such as bathrooms and kitchens.

It is also an object of the invention to provide a thermostat assembly which requires less time for its assembly and its installation with respect to the thermostats of the prior art.

Said objects are achieved with the provision of a thermostat assembly according to the main claim.

Further characteristics of the thermostat assembly of the invention are described in the dependent claims.

The aforesaid objects, together with the advantages that will be mentioned hereinafter, will be highlighted during the description of a preferred embodiment of the invention, which is given by way of non-limiting example with reference to the attached drawings, where:
- figure 1 represents an axonometric view of the thermostat assembly of the invention, according to the preferred embodiment;
- figure 2 shows an axonometric exploded view of the thermostat assembly of figure 1;

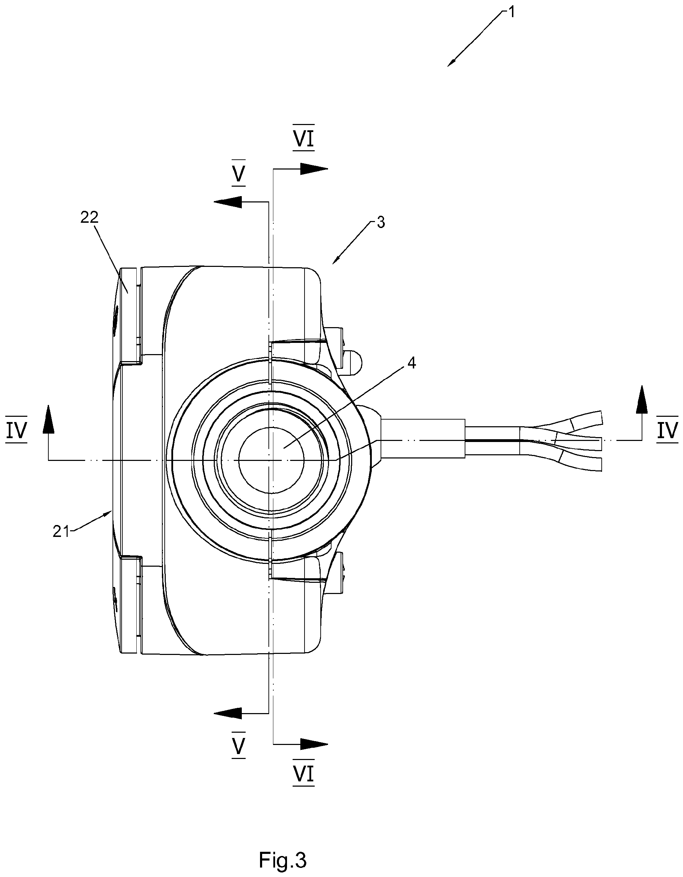

- figure 3 shows a top view of the thermostat assembly of figure 1;
- figure 4 represents a sectioned view of the thermostat assembly of figure 3, according to the section line IV-IV;
- figure 5 represents a sectioned view of the thermostat assembly of figure 3, according to the section line V-V;
- figure 6 represents a sectioned view of the thermostat assembly of figure 3, according to the section line VI-VI.

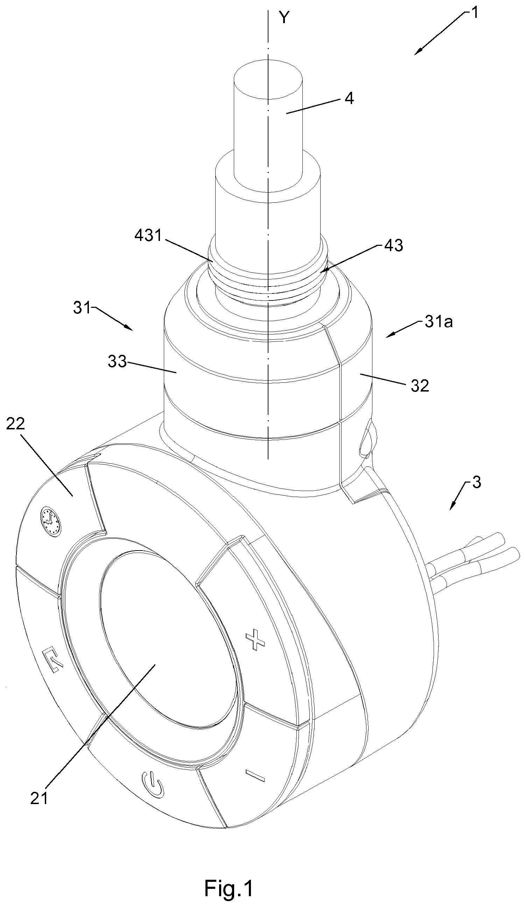

The thermostat assembly of the invention is shown in figure 1, where it is denoted in its entirety by the number **1.**

It is used to perform the regulation of the temperature value in a heater device, in particular in heater devices such as heaters and radiators, generally known also as towel rails.

According to the preferred embodiment of the invention, the thermostat assembly is also used for regulating the temperature value according to a pre-selected trend over time, acting functionally as a chronothermostat.

It should be noted that the term "thermostat assembly" is used generically in the text and that this term must be understood as referring to both a thermostat and a chronothermostat.

The thermostat assembly **1,** subject of the invention, comprises electronic thermoregulation means **2** configured to activate and deactivate the heating of the heating means adapted to flow inside a heater device.

Such electronic thermoregulation means **2** are components known per se of the thermostats and usually comprises electronic elements for controlling the heating of the heating means, generally water or steam, which flow inside the tubes of the heater devices.

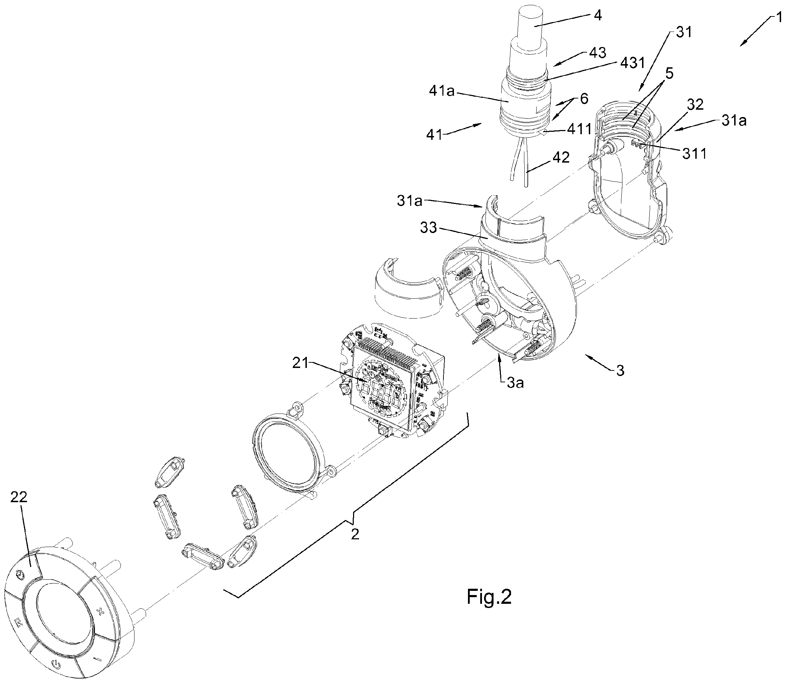

Preferably, as shown in Figures 1 and 2, the electronic thermoregulation means **2** comprise at least one display **21** for viewing the operating parameters, such as for example temperature, humidity, etc., and, moreover, a keyboard **22** which allows programming the operation and related parameters of the thermostat assembly **1.**

According to the preferred embodiment of the invention, the thermostat assembly **1** of the invention further comprises a casing **3** which defines a cavity **3a,** shown in Figure 2, which is adapted to accommodate the aforesaid electronic thermoregulation means **2.**

Furthermore, the casing **3** comprises first mechanical coupling means **31** which will be described in more detail later.

The thermostat assembly **1** further comprises a probe **4** for detecting the temperature value of the heating means.

This probe **4** is a probe known per se, configured to detect the temperature value of the heating means of the heater device and transmit them, by means of electrical connection means **42,** to the electronic thermoregulation means **2** which, on the basis of such values, modulate the heating of the heating means.

Preferably, such electrical connection means **42** are further configured to be connected to an electrical network, for example by means of an electrical conductor associated with an electrical plug adapted to be applied to an electrical socket or directly by connection to an electrical junction box, so as to receive an electric power from the electric network and transmit it to the electronic thermoregulation means **2,** putting them in operation.

The probe **4** of the invention preferably has a substantially longitudinal extension and further comprises second mechanical coupling means **41,** which will be described later, complementary to the first mechanical coupling means **31** so as to be connectable with the latter and allow the coupling of the probe **4** with the casing **3.**

The probe **4** further comprises third mechanical coupling means **43** configured to allow the connection of the probe **4** to an inlet mouth of the heater device.

Such third mechanical coupling means **43,** according to the preferred embodiment of the invention, comprise a thread **431** preferably defined at the end of the probe **4,** shown in Figure 1, which allows its connection to the inlet mouth of the heater device.

In fact, in operation, in order to connect the probe **4** to the heater device, it is inserted through the inlet mouth of the heater device itself and screwed to a nut screw defined on the inner surface of the aforesaid inlet mouth by the thread **431.**

According to the preferred embodiment of the invention, the first mechanical coupling means **31** and the second mechanical coupling means **41** are configured to allow the rotation of the casing **3** with respect to the probe **4** and, vice versa, the rotation of the probe **4** with respect to the casing **3,** when the probe **4** is coupled to the casing **3.**

This rotation takes place according to an axis of rotation **Y,** which preferably corresponds to the axis of extension of the probe **4.**

Advantageously, the possibility of rotating the casing **3** and the electronic thermoregulation means **2** contained therein when the probe **4** is coupled to the casing **3** makes it possible to orient the display and/or the programming keyboard towards the user, regardless of the position reached, once the thermostat assembly is installed at the heater device.

In this way it is advantageously avoided that the thermostat assembly has to be uninstalled and reinstalled from/on the heater device if the display or the keyboard are turned towards the opposite side to the user's position, as is the case for the thermostats of the prior art in which, once the probe has been coupled to the casing containing the electronic control elements, the position of the casing with the display can no longer be modified except by decoupling it from the probe and/or from the heater device.

According to the preferred embodiment of the invention, the first mechanical coupling means **31** and the second mechanical coupling means **41** are configured to allow the rotation of the casing **3** with respect to the probe **4** and, vice versa, even when the electrical connection means **42** are connected to the electrical network and the electronic thermoregulation means **2** are in operation.

In this way, it is advantageously possible to orient the display and/or the programming keyboard by rotating the casing **3** even after the connection and installation of the thermostat assembly **1** to the heater device and, in particular, after the activation of the electronic thermoregulation means **2** by electrical connection.

This rotation is advantageously allowed by the particular conformation of the first mechanical coupling means **31** and the second mechanical coupling means **41** according to what will now be described.

According to the preferred embodiment of the invention, the first mechanical coupling means **31** comprise a substantially cylindrical seat **31a** communicating with the cavity **3a.**

Furthermore, the second mechanical coupling means **41** comprise a substantially cylindrical body **41a** projecting from the probe **4** which is configured to be coupled by interference with the aforesaid seat **31a.**

This coupling is allowed by the advantageous configuration of the seat **31a** and the cylindrical body **41a,** shown by way of example in Figures from 4 to 6.

In particular, according to the preferred embodiment of the invention, the aforesaid seat **31a** of the first mechanical coupling means **31** is defined by the coupling of at least two half-shells **32, 33** belonging to the casing **3** and shown in Figure 2.

Each of such two half-shells, particularly a first half-shell **32** and a second half-shell **33,** has a concave profile and can be coupled together so as to realise the seat **31a.**

This coupling is preferably realised by mechanical joining elements which are known per se, such as for example screws.

However, it is not excluded that, according to alternative embodiments of the invention, the coupling of the half-shells takes place by engagement or other known techniques.

Advantageously, the realisation of the seat **31a** takes place directly by coupling the two half-shells **32** and **33** around the cylindrical body **41a** of the probe **4,** simplifying the mounting operations of the thermostat assembly **1.**

In particular, according to the preferred embodiment of the invention, a first annular housing **5** is defined in the seat **31a** and in the cylindrical body **41a** a projecting body **6,** at least partially annular, is defined.

When the probe **4** is coupled to the casing **3** with the cylindrical body **41a** fitted in the seat **31a,** the projecting body **6** is aligned with the first annular housing **5** so as to be able to be placed at least partially inside it.

Advantageously, the fitting of the projecting body **6** in the first annular housing **5** prevents the probe **4** from accidentally decoupling from the casing **3.**

At the same time, the sliding of the projecting body **6** along the first annular housing **5** does not prevent the aforesaid rotation of the probe **4** from being performed with respect to the casing **3.**

According to the preferred embodiment of the invention, the cylindrical body **41a** comprises a second annular housing **7** and the projecting body **6** is a sealing gasket arranged in this second annular housing **7.**

Advantageously, the presence of a sealing gasket in the seat **31a** ensures the stable coupling of the latter to the cylindrical body **41a** and, furthermore, an effective sealing of the cavity **3a.**

Preferably, this sealing gasket is made of elastomeric material such as for example chloroprene, ethylene-propylene, nitrile, silicone, etc.

Even more preferably, this sealing gasket is a gasket of the o-ring type.

Advantageously, the presence of a sealing gasket, in particular of an o-ring gasket, prevents any drops of water or humidity from penetrating through the seat **31a** inside the cavity **3a** thus allowing to isolate, and therefore protect, the electronic thermoregulation means **2** contained therein.

It is not excluded, however, that in different embodiments of the invention this sealing gasket is not made of elastomeric material or is not present.

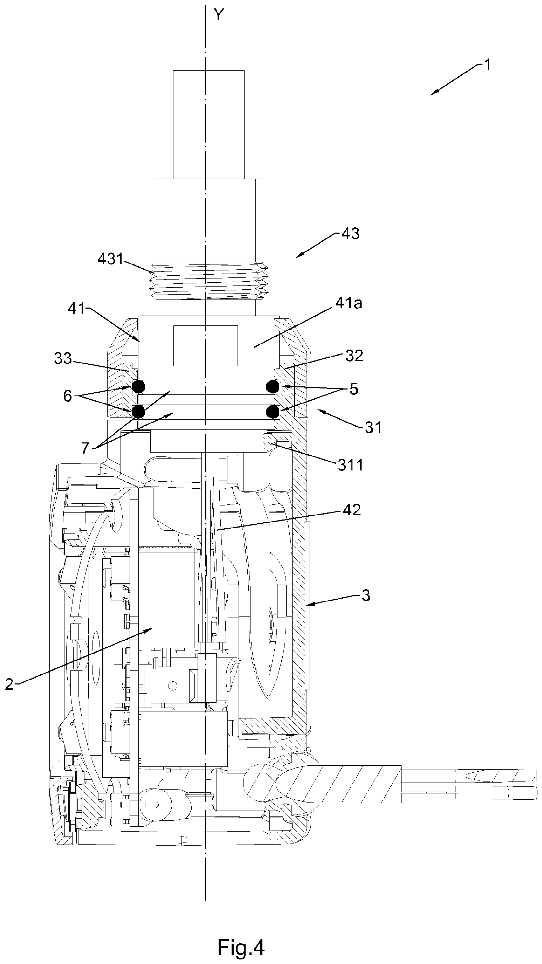

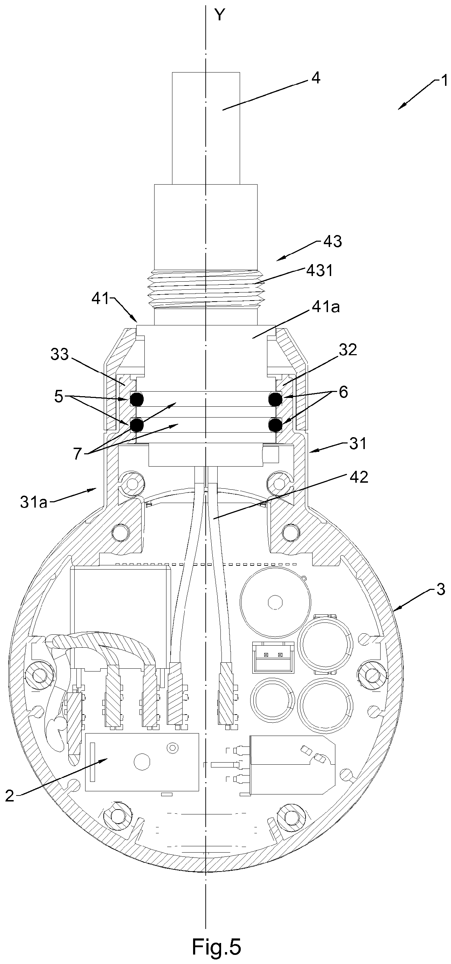

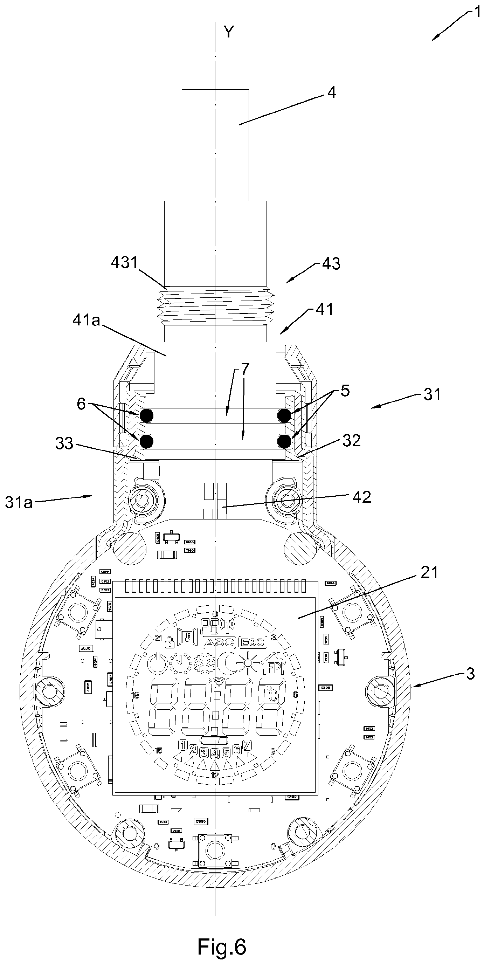

Preferably, the thermostat assembly **1** comprises two or more projecting bodies **6,** each adapted to be arranged in a corresponding first annular housing **5** when the probe **4** is coupled to the casing **3,** as shown in Figures 4 to 6.

Even more preferably, the thermostat assembly **1** comprises two or more second annular housings **7,** each configured to accommodate a corresponding sealing gasket.

Part of the present invention is also a different embodiment of the thermostat assembly **1,** not shown in the figures, which comprises all the characteristics indicated for the preferred embodiment of the invention, included the variants, and, unlike the preferred embodiment, it presents the first annular housing **5** defined on the cylindrical body **41a** and the projecting body **6** defined in the seat **31a.**

Similarly to the preferred embodiment of the invention, also for this different embodiment the projecting body **6** is adapted to be arranged in the first annular housing **5** when the probe **4** is coupled to the housing **3,** so as to prevent the accidental decoupling of the probe **4** from the casing **3** and at the same time allow the rotation thereof, as previously indicated.

Preferably, according to this different embodiment, the second annular housing is defined in the seat **31a** and the projecting body **6** is a sealing gasket, preferably an o-ring gasket, which is arranged in said second annular housing **7.**

Returning to the preferred embodiment of the thermostat assembly **1** of the invention, the second mechanical coupling means **41** also comprise a pin **411** projecting radially from the probe **4,** shown in Figure 2, and the first mechanical coupling means **31** comprise at least one contrasting wall **311** also shown in Figure 2.

When the probe **4** rotates, the pin **411** rotates integrally with it until it intercepts the contrasting wall **311** which prevents the further rotation.

Advantageously, the locking of the rotation prevents the electrical connection means **42** connected with the electronic thermoregulation means **2** from twisting together, maintaining an extended configuration which is optimal for their operation.

According to the preferred embodiment of the invention, the rotation of the casing **3** with respect to the probe **4** is allowed according to a rotation angle lower than 360 degrees.

Preferably, this rotation takes place according to a rotation angle of about 350 degrees.

It is not excluded that according to different embodiments of the invention, the pin **411** and/or the contrasting wall **311** have a shape different from what is indicated or are not present.

Operationally, in order to carry out the installation of the thermostat assembly **1** of the present invention, the electronic thermoregulation means **2** are arranged inside the cavity **3a** of the casing **3** and connected to the probe **4** through the connection with the electrical connection means **42.**

Subsequently, the first half-shell **32** of the casing **3** is coupled to the second half-shell **33** by means of screw junction elements so as to realise the seat **31a** and so that the latter is configured with the first annular housing **5** facing the second annular housing **7.**

Between the first annular housing **5** and the second annular housing **7** an o-ring sealing gasket is also arranged so as to ensure the seal between the seat **31a** of the casing **3** and the cylindrical body **41a** of the probe **4,** preventing the accidental decoupling of the probe **4** from the casing **3.**

The thermostat assembly **1** thus associated is then coupled to a heater device, by fitting the probe **4** in an inlet mouth of the aforesaid heater device and screwing it to the latter by means of the thread **431.**

Furthermore, the electrical connection means **42** are connected to the electric network by connection to an electric socket or to an electrical junction box, to receive the electric power from the electric network and transmit the latter to the electronic thermoregulation means **2** putting them in operation.

Advantageously, when the probe **4** is coupled to the casing **3,** and even further when the thermostat assembly **1** is associated with the heater device, the casing 3 is stably coupled to the probe **4** by interference of the projecting body **6** with the first annular housing **5** and can also be put in rotation with respect to the probe **4** by sliding the seat **31a** around the cylindrical body **41a,** according to the axis of rotation **Y.**

Advantageously, even when the electronic means **2** are in operation, i.e. are connected to the electrical network in order to carry out its thermoregulation function, the casing **3** coupled to the probe **4** can be put in rotation with respect to the probe **4** by sliding the seat **31a** around the cylindrical body **41a,** according to the axis of rotation **Y.**

Furthermore, thanks to the presence of the pin **411** and the contrasting wall **311,** it is possible to perform the aforesaid rotation of the casing **3** during the operation of the electronic thermoregulation means **2,** preventing the electrical connection means **42** connected to the electronic thermoregulation means **2** from twisting together and thus facilitating the maintenance of their extended configuration, optimal for their operation.

On the basis of the foregoing, therefore, the thermostat assembly of the invention reaches all the prefixed aims.

In particular, thanks to the configuration of the first and second mechanical coupling means of the casing and the probe, the purpose of realising a thermostat which allows the user to orient the display and/or the programming keyboard without having to proceed with the uninstallation of the thermostat itself from the heater device is reached.

Still, thanks to the rotation of the thermostat assembly of the invention, once the latter has been installed on the heater device, it does not need to be removed to carry out the normal maintenance operations.

Furthermore, the presence of one or more sealing gaskets allows the thermostat to be hermetically sealed with respect to the external environment, in particular allowing the thermostat assembly of the invention to be positioned in particularly humid environments or in which water splashes are present, such as bathrooms and kitchens.

Last but not least, the simple half-shell configuration of the casing allows a thermostat assembly to be realised which requires less time for its assembly and its installation with respect to the thermostats of the prior art.

## Claims

1. A thermostat assembly (1) for heater devices, in particular for radiators and heaters, comprising:
- electronic thermoregulation means (2) configured to activate and deactivate the heating of the heating means adapted to flow inside said heater device;
- a casing (3) which defines a cavity (3a) adapted to accommodate said electronic thermoregulation means (2) and comprising first mechanical coupling means (31), said first mechanical coupling means (31) comprising a substantially cylindrical seat (31a);
- a probe (4) for detecting the temperature value of said heating means comprising:
- second mechanical coupling means (41) complementary to said first mechanical coupling means (31) of said casing (3) to allow the coupling of said probe (4) to said casing (3), said second mechanical coupling means (41) comprising a substantially cylindrical body (41a) projecting from said probe (4) and configured to be coupled by interference with said seat (31a) of said first mechanical coupling means (31);
- electrical connection means (42) for the connection to said electronic thermoregulation means (2);
- third mechanical coupling means (43) configured to allow the connection of said probe (4) to an inlet mouth of said heater device;
when said probe (4) is coupled to said casing (3), said first mechanical coupling means (31) and said second mechanical coupling means (41) being configured to allow the rotation of said casing (3) with respect to said probe (4) according to an axis of rotation (Y);
**characterized in that** at least a first annular housing (5) is defined in said seat (31a) and at least one projecting body (6) at least partially annular is defined in said cylindrical body (41a) or at least a first annular housing (5) is defined in said cylindrical body (41a) and at least one projecting body (6) at least partially annular is defined in said seat (31a); said projecting body (6) being adapted to be arranged in said first annular housing (5) when said probe (4) is coupled to said casing (3) so that the fitting of the projecting body (6) in the first annular housing (5) prevents the decoupling of said probe (4) from said casing (3) but does not prevent said rotation of said casing (3) with respect to said probe.

2. The thermostat assembly (1) according to the preceding claim, **characterized in that** said first mechanical coupling means (31) and said second mechanical coupling means (41) are configured to allow said rotation of said casing (3) with respect to said probe (4) according to a rotation angle lower than 360 degrees.

3. The thermostat assembly (1) according to any one of the preceding claims, **characterized in that** said projecting body (6) is a sealing gasket arranged in a second annular housing (7) defined either on said cylindrical body (41a) or in said seat (31a), said sealing gasket being preferably an o-ring gasket.

4. The thermostat assembly (1) according to any one of the preceding claims, **characterized in that** said second mechanical coupling means (41) comprise a pin (411) projecting radially from said probe (4) and said first mechanical coupling means (31) comprise at least one contrasting wall (311) adapted to intercept said projecting pin (411) when said probe (4) is coupled to said casing (3) and is rotated according to said axis of rotation (Y).

5. The thermostat assembly (1) according to any one of the preceding claims, **characterized in that** said third mechanical coupling means (43) comprise a thread (431) defined at the end of said probe (4) to allow the connection of said probe (4) to said inlet mouth of said heater device.

6. The thermostat assembly (1) according to any one of the preceding claims, **characterized in that** said casing (3) comprises at least two half-shells (32, 33), particularly a first half-shell (32) and a second half-shell (33), having a concave profile and that can be coupled together to define said seat (31a).

7. The thermostat assembly (1) according to any one of the preceding claims, **characterized in that** said probe (4) has a substantially longitudinal extension and said axis of rotation (Y) corresponds to the axis of extension of said probe (4).

8. The thermostat assembly (1) according to any one of the preceding claims, **characterized in that** said electrical connection means (42) are configured to be connected to an electric network so as to receive an electric power from an electric network and transmit it to said electronic thermoregulation means (2) and put them into operation.

9. The thermostat assembly (1) according to the preceding claim, **characterized in that** said first mechanical coupling means (31) and said second mechanical coupling means (41) are configured to allow said rotation also when said electrical connection means (42) are connected to said electric network and said electronic thermoregulation means (2) are in operation.

## Patentansprüche

1. Thermostatanordnung (1) für Heizvorrichtungen, insbesondere für Heizkörper und Heizungen, umfassend:
- elektronische Wärmeregelungsmittel (2), die dazu konfiguriert sind, die Erwärmung der Heizmittel zu aktivieren bzw. zu deaktivieren, die ausgelegt sind, in die Heizvorrichtung hineinzufließen;
- ein Gehäuse (3), das einen Hohlraum (3a) definiert, der zur Aufnahme der elektronischen Wärmeregelungsmittel (2) geeignet ist und erste mechanische Kopplungsmittel (31) umfasst, wobei die ersten mechanischen Kopplungsmittel (31) einen im Wesentlichen zylindrischen Sitz (31a) umfassen;
- eine Sonde (4) zum Erfassen des Temperaturwertes der Heizmittel, umfassend:
- zweite mechanische Kopplungsmittel (41), die zu den ersten mechanischen Kopplungsmitteln (31) des Gehäuses (3) komplementär sind, um die Kopplung der Sonde (4) mit dem Gehäuse (3) zu ermöglichen; wobei die zweiten mechanischen Kopplungsmittel (41) einen im Wesentlichen zylindrischen Körper (41a) umfassen, der aus der Sonde (4) herausragt und dazu konfiguriert ist, mit dem Sitz (31a) der ersten mechanischen Kopplungsmittel (31) durch Interferenz gekoppelt zu werden;
- elektrische Verbindungsmittel (42) für die Verbindung an die elektronischen Wärmeregelungsmittel (2);
- dritte mechanische Kopplungsmittel (43), die dazu konfiguriert sind, die Verbindung der Sonde (4) an eine Einlassöffnung der Heizvorrichtung zu ermöglichen;
wenn die Sonde (4) mit dem Gehäuse (3) gekoppelt ist, wobei die ersten mechanischen Kopplungsmittel (31) und die zweiten mechanischen Kopplungsmittel (41) dazu konfiguriert sind, die Drehung des Gehäuses (3) in Bezug auf die Sonde (4) entsprechend einer Drehachse (Y) zu ermöglichen; **dadurch gekennzeichnet, dass** mindestens ein erstes ringförmiges Gehäuse (5) in dem Sitz (31a) definiert ist und mindestens ein zumindest teilweise ringförmiger vorstehender Körper (6) in dem zylindrischen Körper (41a) definiert ist, oder mindestens ein erstes ringförmiges Gehäuse (5) in dem zylindrischen Körper (41a) definiert ist und mindestens ein zumindest teilweise ringförmiger vorstehender Körper (6) in dem Sitz (31a) definiert ist; wobei der vorstehende Körper (6) dazu ausgebildet ist, in dem ersten ringförmigen Gehäuse (5) angeordnet zu werden, wenn die Sonde (4) mit dem Gehäuse (3) so gekoppelt ist, dass der Einbau des vorstehenden Körpers (6) in das erste ringförmige Gehäuse (5) die Entkopplung der Sonde (4) vom Gehäuse (3) verhindert, aber die Drehung des Gehäuses (3) in Bezug auf die Sonde nicht verhindert.

2. Thermostatanordnung (1) nach dem vorhergehenden Anspruch, **dadurch gekennzeichnet, dass** die ersten mechanischen Kopplungsmittel (31) und die zweiten mechanischen Kopplungsmittel (41) konfiguriert sind, um die Drehung des Gehäuses (3) in Bezug auf die Sonde (4) nach einem Drehwinkel von weniger als 360 Grad zu ermöglichen.

3. Thermostatanordnung (1) nach irgendeinem der vorhergehenden Ansprüche, **dadurch gekennzeichnet, dass** der vorstehende Körper (6) eine Dichtung ist, die in einem zweiten ringförmigen Gehäuse (7) angeordnet ist, das entweder an dem zylindrischen Körper (41a) oder in dem Sitz (31a) definiert ist, wobei die Dichtung vorzugsweise eine O-Ring-Dichtung ist.

4. Thermostatanordnung (1) nach irgendeinem der vorhergehenden Ansprüche, **dadurch gekennzeichnet, dass** die zweiten mechanischen Kopplungsmittel (41) einen von der Sonde (4) radial vorstehenden Stift (411) umfassen, und die ersten mechanischen Kopplungsmittel (31) mindestens eine Kontrastwand (311) umfassen, die zum Abfangen des vorstehenden Stifts (411) geeignet ist, wenn die Sonde (4) mit dem Gehäuse (3) gekoppelt ist und gemäß der Drehachse (Y) gedreht wird.

5. Thermostatanordnung (1) nach irgendeinem der vorhergehenden Ansprüche, **dadurch gekennzeichnet, dass** die dritten mechanischen Kopplungsmittel (43) ein Gewinde (431) umfassen, das am Ende der Sonde (4) definiert ist, um die Verbindung der Sonde (4) zu der Einlassmündung der Heizvorrichtung zu ermöglichen.

6. Thermostatanordnung (1) nach irgendeinem der vorhergehenden Ansprüche, **dadurch gekennzeichnet, dass** das Gehäuse (3) mindestens zwei Halbschalen (32, 33), insbesondere eine erste Halbschale (32) und eine zweite Halbschale (33) umfasst, die ein konkaves Profil aufweisen und miteinander gekoppelt werden können, um den Sitz (31a) zu definieren.

7. Thermostatanordnung (1) nach irgendeinem der vorhergehenden Ansprüche, **dadurch gekennzeichnet, dass** die Sonde (4) eine im Wesentlichen längliche Erstreckung aufweist und, dass die Drehachse (Y) der Erstreckungsachse der Sonde (4) entspricht.

8. Thermostatanordnung (1) nach irgendeinem der vorhergehenden Ansprüche, **dadurch gekennzeichnet, dass** die elektrischen Verbindungsmittel (42) dazu konfiguriert sind, mit einem elektrischen Netzwerk verbunden zu werden, um eine elektrische Energie von einem elektrischen Netzwerk zu empfangen und diese an die elektronischen Wärmeregelungsmittel (2) zu senden und in Betrieb zu setzen.

9. Thermostatanordnung (1) nach dem vorhergehenden Anspruch, **dadurch gekennzeichnet, dass** die ersten mechanischen Kopplungsmittel (31) und die zweiten mechanischen Kopplungsmittel (41) dazu konfiguriert sind, die Drehung auch dann zu ermöglichen, wenn die elektrischen Verbindungsmittel (42) an das elektrische Netzwerk angeschlossen sind und die elektronischen Wärmeregelungsmittel (2) in Betrieb sind.

## Revendications

1. Ensemble thermostat (1) pour dispositifs de chauffage, en particulier pour radiateurs et chauffages, comprenant:
- des moyens de thermorégulation électroniques (2) configurés pour activer et désactiver le réchauffement des moyens de chauffage adaptés pour circuler à l'intérieur dudit dispositif de chauffage;
- un boîtier (3) qui définit une cavité (3a) adaptée pour loger lesdits moyens de thermorégulation électroniques (2) et comprenant des premiers moyens de couplage mécanique (31), lesdits premiers moyens de couplage mécanique (31) comprenant un siège sensiblement cylindrique (31a);
- une sonde (4) pour détecter la valeur de température desdits moyens de chauffage comprenant:
- des deuxièmes moyens de couplage mécanique (41) complémentaires auxdits premiers moyens de couplage mécanique (31) dudit boîtier (3) pour permettre le couplage de ladite sonde (4) audit boîtier (3), lesdits deuxièmes moyens de couplage mécanique (41) comprenant un corps sensiblement cylindrique (41a) faisant saillie de ladite sonde (4) et configuré pour être couplé par interférence avec ledit siège (31a) desdits premiers moyens de couplage mécanique (31);
- des moyens de connexion électrique (42) pour la connexion auxdits moyens de thermorégulation électroniques (2);
- des troisièmes moyens de couplage mécanique (43) configurés pour permettre la connexion de ladite sonde (4) à une bouche d'entrée dudit dispositif de chauffage;
lorsque ladite sonde (4) est couplée audit boîtier (3), lesdits premiers moyens de couplage mécanique (31) et lesdits deuxièmes moyens de couplage mécanique (41) étant configurés pour permettre la rotation dudit boîtier (3) par rapport à ladite sonde (4) selon un axe de rotation (Y);
**caractérisé en ce qu'**au moins un premier logement annulaire (5) est défini dans ledit siège (31a) et au moins un corps saillant (6) au moins partiellement annulaire est défini dans ledit corps cylindrique (41a) ou au moins un premier logement annulaire (5) est défini dans ledit corps cylindrique (41a) et au moins un corps saillant (6) au moins partiellement annulaire est défini dans ledit siège (31a); ledit corps saillant (6) étant adapté pour être disposé dans ledit premier logement annulaire (5) lorsque ladite sonde (4) est couplée audit boîtier (3) de sorte que le raccord du corps saillant (6) dans le premier logement annulaire (5) empêche le découplage de ladite sonde (4) dudit boîtier (3) mais n'empêche pas ladite rotation dudit boîtier (3) par rapport à ladite sonde.

2. Ensemble thermostat (1) selon la revendication précédente, **caractérisé en ce que** lesdits premiers moyens de couplage mécanique (31) et lesdits deuxièmes moyens de couplage mécanique (41) sont configurés pour permettre ladite rotation dudit boîtier (3) par rapport à ladite sonde (4) selon un angle de rotation inférieur à 360 degrés.

3. Ensemble thermostat (1) selon l'une quelconque des revendications précédentes, **caractérisé en ce que** ledit corps saillant (6) est un joint d'étanchéité disposé dans un deuxième logement annulaire (7) défini sur ledit corps cylindrique (41a) ou dans ledit siège (31a), ledit joint d'étanchéité étant de préférence un joint o-ring.

4. Ensemble thermostat (1) selon l'une quelconque des revendications précédentes, **caractérisé en ce que** lesdits deuxièmes moyens de couplage mécanique (41) comprennent une broche (411) faisant saillie radialement de ladite sonde (4) et lesdits premiers moyens de couplage mécanique (31) comprennent au moins une paroi de contraste (311) adaptée pour intercepter ladite broche saillante (411) lorsque ladite sonde (4) est couplée audit boîtier (3) et est tournée selon ledit axe de rotation (Y).

5. Ensemble thermostat (1) selon l'une quelconque des revendications précédentes, **caractérisé en ce que** lesdits troisièmes moyens de couplage mécanique (43) comprennent un filetage (431) défini en correspondance de l'extrémité de ladite sonde (4) pour permettre la connexion de ladite sonde (4) à ladite bouche d'entrée dudit dispositif de chauffage.

6. Ensemble thermostat (1) selon l'une quelconque des revendications précédentes, **caractérisé en ce que** ledit boîtier (3) comprend au moins deux demi-coquilles (32, 33), en particulier une première demi-coquille (32) et une deuxième demi-coquille (33), ayant un profil concave et qui peuvent être couplées ensemble pour définir ledit siège (31a).

7. Ensemble thermostat (1) selon l'une quelconque des revendications précédentes, **caractérisé en ce que** ladite sonde (4) a une extension sensiblement longitudinale et ledit axe de rotation (Y) correspond à l'axe d'extension de ladite sonde (4).

8. Ensemble thermostat (1) selon l'une quelconque des revendications précédentes, **caractérisé en ce que** lesdits moyens de connexion électrique (42) sont configurés pour être connectés à un réseau électrique de façon à recevoir un courant électrique d'un réseau électrique et le transmettre auxdits moyens de thermorégulation électroniques (2) et les mettre en fonctionnement.

9. Ensemble thermostat (1) selon la revendication précédente, **caractérisé en ce que** lesdits premiers moyens de couplage mécanique (31) et lesdits deuxièmes moyens de couplage mécanique (41) sont configurés pour permettre également ladite rotation lorsque lesdits moyens de connexion électrique (42) sont connectés audit réseau électrique et lesdits moyens de thermorégulation électroniques (2) sont en fonctionnement.
